(19) **Europäisches Patentamt / European Patent Office / Office européen des brevets**

(11) **EP 4 586 706 A1**

(12) **EUROPEAN PATENT APPLICATION**
published in accordance with Art. 153(4) EPC

(43) Date of publication:
**16.07.2025 Bulletin 2025/29**

(21) Application number: **23889087.5**

(22) Date of filing: **06.11.2023**

(51) International Patent Classification (IPC):
*H04W 56/00* (2009.01)   *H04B 7/145* (2006.01)
*H04W 48/10* (2009.01)   *H04W 74/08* (2024.01)
*H04L 5/00* (2006.01)

(52) Cooperative Patent Classification (CPC):
**H04B 7/145; H04L 5/00; H04W 48/10; H04W 56/00; H04W 74/08**

(86) International application number:
**PCT/KR2023/017689**

(87) International publication number:
**WO 2024/101827 (16.05.2024 Gazette 2024/20)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **08.11.2022 KR 20220147820**

(71) Applicant: **Samsung Electronics Co., Ltd.**
**Suwon-si, Gyeonggi-do 16677 (KR)**

(72) Inventors:
• **BAE, Kitaek**
  **Suwon-si, Gyeonggi-do 16677 (KR)**
• **LEE, Jaehyun**
  **Suwon-si, Gyeonggi-do 16677 (KR)**
• **KIM, Youngjoon**
  **Suwon-si, Gyeonggi-do 16677 (KR)**
• **NA, Ilju**
  **Suwon-si, Gyeonggi-do 16677 (KR)**

(74) Representative: **Gulde & Partner**
**Patent- und Rechtsanwaltskanzlei mbB**
**Berliner Freiheit 2**
**10785 Berlin (DE)**

(54) **METHOD AND APPARATUS FOR CONFIGURING COMMUNICATION USING INTELLIGENT SURFACE**

(57) The present disclosure relates to a 5G or 6G communication system for supporting a higher data transmission rate than a 4G communication system such as LTE. According to an embodiment of the present invention, disclosed may be a method for a base station which communicates with a UE through a reconfigurable intelligent surface (RIS) in a wireless communication system, the method comprising the steps of: acquiring configuration information regarding the RIS through a pre-configuration; identifying to transmit a synchronization signal block (SSB) through the RIS; and repeatedly transmitting the same SSB for a time longer than or equal to the maximum period of the RIS.

EP 4 586 706 A1

**(Cont. next page)**

FIG. 5

510 — RIS
RC — 520

540

530 — BS

UE

◄----► In-band signal   🗎✓ Specification

(a)

530        510        520        540

BS         BIS        RC         UE

Factory
Setting    BS Setting

MANUAL
Setting    BS Setting    RC Setting

(b)

**Description**

[Technical Field]

The disclosure relates to a reconfigurable intelligent surface (RIS) and, specifically, to a method and apparatus for configuring an intelligent surface having a control structure capable of reflecting an electromagnetic wave in a predetermined direction.

[Background Art]

A review of the development of wireless communication from generation to generation shows that the development has mostly been directed to technologies for services targeting humans, such as voice-based services, multimedia services, and data services. It is expected that connected devices which are exponentially increasing after commercialization of 5th generation (5G) communication systems will be connected to communication networks. Examples of things connected to networks may include vehicles, robots, drones, home appliances, displays, smart sensors installed in various infrastructures, construction machines, factory equipment, and the like. Mobiles devices are expected to evolve into various formfactors such as augmented reality glasses, virtual reality headsets, and hologram devices. In order to provide various services by connecting hundreds of billions of devices and things in the 6th-generation (6G) era, there have been ongoing efforts to develop improved 6G communication systems. For these reasons, 6G communication systems are referred to as "beyond-5G" systems.

6G communication systems, which are expected to be implemented approximately by 2030, will have a maximum transmission rate of tera (1,000 giga)-level bps and a radio latency of 100 μ sec. That is, 6G communication systems will be 50 times as fast as 5G communication systems and have the 1/10 radio latency thereof.

In order to accomplish such a high data transmission rate and an ultra-low latency, it has been considered to implement 6G communication systems in a terahertz band (for example, 95GHz to 3THz bands). It is expected that, due to severer path loss and atmospheric absorption in the terahertz bands than those in mmWave bands introduced in 5G, a technology capable of securing the signal transmission distance (that is, coverage) will become more crucial. It is necessary to develop, as major technologies for securing the coverage, multiantenna transmission technologies including radio frequency (RF) elements, antennas, novel waveforms having a better coverage than OFDM, beamforming and massive MIMO, full dimensional MIMO (FD-MIMO), array antennas, and large-scale antennas. In addition, there has been ongoing discussion on new technologies for improving the coverage of terahertz-band signals, such as metamaterial-based lenses and antennas, orbital angular momentum (OAM), and reconfigurable intelligent surface (RIS).

Moreover, in order to improve the frequency efficiencies and system networks, the following technologies have been developed for 6G communication systems: a full-duplex technology for enabling an uplink (UE transmission) and a downlink (node B transmission) to simultaneously use the same frequency resource at the same time; a network technology for utilizing satellites, high-altitude platform stations (HAPS), and the like in an integrated manner; a network structure innovation technology for supporting mobile nodes B and the like and enabling network operation optimization and automation and the like; a dynamic spectrum sharing technology though collision avoidance based on spectrum use prediction, an artificial intelligence (AI)-based communication technology for implementing system optimization by using AI from the technology design step and internalizing end-to-end AI support functions; and a next-generation distributed computing technology for implementing a service having a complexity that exceeds the limit of UE computing ability by using super-high-performance communication and computing resources (mobile edge computing (MEC), clouds, and the like). In addition, attempts have been continuously made to further enhance connectivity between devices, further optimize networks, promote software implementation of network entities, and increase the openness of wireless communication through design of new protocols to be used in 6G communication systems, development of mechanisms for implementation of hardware-based security environments and secure use of data, and development of technologies for privacy maintenance methods.

It is expected that such research and development of 6G communication systems will enable the next hyper-connected experience in new dimensions through the hyper-connectivity of 6G communication systems that covers both connections between things and connections between humans and things. Specifically, it is expected that services such as truly immersive XR, high-fidelity mobile holograms, and digital replicas could be provided through 6G communication systems. In addition, with enhanced security and reliability, services such as remote surgery, industrial automation, and emergency response will be provided through 6G communication systems, and thus these services will be applied to various fields including industrial, medical, automobile, and home appliance fields.

A reconfigurable intelligent surface (RIS) is an intelligent surface and, when an electromagnetic wave transmitted in an uplink or downlink arrives the RIS, the RIS reflects and transfers the corresponding electromagnetic wave in another direction. A general object has properties that reflect, refract, or absorb a portion of an incident electromagnetic wave, but the RIS is an object with a material and structure that shows an electromagnetically high reflection coefficient, and increases the amount of electromagnetic wave reflection. In addition, in the RIS, an additional phase difference may be applied to an incident electromagnetic wave by utilizing an electric control element connected to a material that reflects an electromagnetic wave, and thus a phase value of an electromagnetic wave reflected in a predetermined direction may be adjustable. Accordingly, when reflective waves reflected by multiple unit structures of the RIS are superposed, constructive interface (superposition) between reflective waves having the same phase may occur and electromagnetic waves in a predetermined direction may be increased. That is, the RIS does not include a semiconductor that electrically causes electromagnetic wave amplification. However, a phenomenon may occur in which electromagnetic waves reflected by the multiple unit structures of the RIS are superposed and electromagnetic waves are amplified in a predetermined direction, and thus, reception power between a base station or a user equipment (UE) at a predetermined location may be increased due to the RIS.

Conventionally, the RIS is configured in the form that includes a control signal transmitter and a control signal receiver. The control signal transmitter and the control signal receiver are components needed for the RIS to measure a magnitude of an input electromagnetic wave or to feed back a magnitude of a measured signal. Conventionally, an additional circuit needs to be included in the RIS in order to perform control signal transmission or reception, or to perform reference signal transmission or reception and estimation, and an algorithm for signal transmission or reception needs to be proposed.

Conventionally, a method of physically embodying a control structure for the RIS is proposed. For example, a varactor diode or liquid crystal type of control element is used to give each unit cell a phase difference so that a direction of a reflected electromagnetic wave of the RIS may be adjusted. The control element may be controlled electrically by adjusting a voltage or a current. Therefore, conventionally, a signal indicating changing of a characteristic of an electrical element may need to be input to the RIS, and a device that provides an input to the RIS may be referred to as an RIS controller (RC). The RC may need an antenna or wired reception terminal to receive a control signal in a wireless or wired manner, and may need a separate algorithm for processing a received control signal.

As described above, to transmit or receive a control signal of the RIS via the RC, another communication equipment may be additionally needed and algorithm may also be additionally needed to operate the communication equipment. In this instance, usability of the RIS may have no remarkable advantageous as compared with devices widely provided on the market, such as a wireless signal amplifier (e.g., Wi-Fi extender), relay, a femtocell, or the like. From an economic perspective, a radio resource is used to transmit and receive an RC control signal in order to control the RIS, and this may cause a waste of radio resource and the actual effect of the RIS may further deteriorate. Although the location of a user equipment (UE) located in a coverage hole is recognized by using a control signal, a wireless channel environment may be incapable of controlling the RIS by taking into consideration all complex physical phenomena since an electromagnetic wave goes through reflection, refraction, diffraction, penetration, or the like in many locations due to its characteristics, and arrives a receiver. According to the conventional RIS production technology, the number of beams which the RIS is capable of being oriented to is small, and, although a beamforming technology that re-emits an electromagnetic wave incident to the RIS so as to be concentrated in one direction is used, the RIS needs to have a large area including a significantly large number of unit cells so as to obtain a high beam gain. Accordingly, its commercial value may be low, which is limitation of the RIS.

[Disclosure]

[Technical Problem]

The disclosure is to provide a communication configuration method and an apparatus therefor in the case of utilizing a transparent RIS that operates without a device or operation process for transmitting or receiving a series of control signals for beam configuration and reception signal measurement, which is a drawback of the conventional art.

[Technical Solution]

According to an embodiment of the disclosure, in a method of a base station that communicates with a terminal via a reconfigurable intelligent surface (RIS) in a wireless communication system, the method may include an operation of obtaining configuration information associated with an RIS via a pre-configuration, an operation of identifying that a synchronization signal block (SSB) is to be transmitted via the RIS, and an operation of repeatedly transmitting an identical SSB during a time greater than or equal to a maximum period of the RIS.

The method of the base station may further include an operation of including periodicity information of the RIS and 1-bit RIS indicator information in a payload of a physical broadcast channel (PBCH) included in the SSB, and the RIS indicator information may indicate that the SSB is an SSB transferred via an RIS.

In the method of the base station, the SSB index that is used for generating a PBCH demodulation reference signal (DMRS) included in the SSB may be fixed to a predetermined value.

The method of the base station may further include an operation of receiving, from the terminal, a physical random access channel (PRACH) preamble for random access, and an operation of scrambling a random access response (RAR) message, which is a response to the PRACH preamble, with an extended random access radio network temporary identifier (RA-RNTI) generated based on the following equation

$$Extended\ RA\ RNTI\ =\ 1+S_{id}+14\times t_{id}+14\times 80\times ul_{carrier\ id}$$

In the method of the base station, an RACH occasion (RO) allocation process may be performed only via time division multiplexing (TDM), and when frequency division multiplexing (FDM) configuration information exists, the base station may not use the FDM configuration information.

The method of the base station may further include an operation of transmitting, to the terminal, information associated with RIS session addition via a system information block (SIB), and when an RIS session SSB is addable to a half frame, the information associated with the RIS session addition may further include information associated with a maximum number of SSBs capable of being transmitted in a half frame when an RIS session is added, and when an RIS session SSB is not addable to a half frame, the information associated with the RIS session addition may further include RIS-dedicated transmission periodicity information, which is dedicated to the RIS, and an RIS-dedicated transmission period may be configured to be greater than an SSB transmission period when the RIS is not used.

According to another embodiment of the disclosure, in a method of a terminal that communicates with a base station via a reconfigurable intelligent surface (RIS) in a wireless communication system, the method may include an operation of receiving a synchronization signal block (SSB) from the base station, an operation of identifying whether the SSB is transmitted via an RIS, and an operation of repeatedly transmitting a physical random access channel (PRACH) preamble based on RIS periodicity information indicated by a PBCH included in the SSB when the SSB is transmitted via the RIS.

According to another embodiment of the disclosure, a base station that communicates with a terminal via a reconfigurable intelligent surface (RIS) in a wireless communication system may include a transceiver and a controller that is configured to obtain configuration information associated with an RIS via a pre-configuration, to identify that a synchronization signal block (SSB) is to be transmitted via the RIS, and to repeatedly transmit an identical SSB during a time greater than or equal to a maximum period of the RIS.

According to another embodiment of the disclosure, a terminal that communicates with a base station via a reconfigurable intelligent surface (RIS) in a wireless communication system may include a transceiver and a controller that is configured to receive a synchronization signal block (SSB) from a base station, to identify whether the SSB is transmitted via an RIS, and to repeatedly transmit a physical random access channel (PRACH) preamble based on RIS periodicity information indicated by a PBCH included in the SSB when the SSB is transmitted via the RIS.

[Advantageous Effects]

According to embodiments of the disclosure, an RIS may operate without control signal reception from the outside or an additional operation process, and thus time resources, frequency resources, and power resources may be saved as compared with the existing RIS operation.

[Description of Drawings]

FIGS. 1A and 1B are diagrams illustrating an example of a conventional RIS operation method;
FIGS. 2A and 2B are diagrams illustrating another example of a conventional RIS operation method;
FIG. 3 is a diagram schematically illustrating a configuration of a conventional RIS;
FIG. 4 is a diagram illustrating a random access procedure performed when an RIS is not utilized;
FIG. 5A and 5B are diagrams schematically illustrating a configuration of a transparent RIS system and a configuration method according to an embodiment of the disclosure;
FIG. 6 is a diagram schematically illustrating a configuration of an RIS according to an embodiment of the disclosure;
FIG. 7 is a diagram illustrating a transmission method of an extended RACH;
FIG. 8 is a diagram illustrating an RIS guard symbol in a transparent RIS operation method according to an embodiment of the disclosure;
FIG. 9 is a diagram illustrating a method of performing data transmission and beam management, by an RIS according to an embodiment of the disclosure;

FIGS. 10A and 10B are diagrams illustrating SSB transmission and downlink data transmission in a DL operation when an RIS period is configured in units of symbols according to an embodiment of the disclosure;

FIGS. 11A and 11B are diagrams illustrating SSB transmission and downlink data transmission in a DL operation when an RIS period is configured in units of slots, subframes, or frames according to an embodiment of the disclosure;

FIG. 12 and FIG. 13 are diagrams illustrating examples of an SSB time domain mapping method according to an embodiment of the disclosure;

FIGS. 14A and 14B are diagrams illustrating an RIS PRACH occasion proposed in association with a transparent RIS operation according to an embodiment of the disclosure;

FIG. 15 is a diagram illustrating a method of configuring a timing offset for an RIS beam according to an embodiment of the disclosure;

FIG. 16 illustrates a structure of a UE according to an embodiment of the disclosure.

FIG. 17 illustrates a structure of a base station according to an embodiment of the disclosure.

[Mode for Invention]

Hereinafter, exemplary embodiments of the disclosure will be described in detail with reference to the accompanying drawings. It should be noted that, in the accompanying drawings, the same or like elements are designated by the same or like reference signs as much as possible. Also, a detailed description of known functions or configurations that may make the subject matter of the disclosure unnecessarily unclear will be omitted.

In describing the embodiments in the specification, descriptions related to technical contents well-known in the art and not associated directly with the disclosure will be omitted. Such an omission of unnecessary descriptions is intended to prevent obscuring of the main idea of the disclosure and more clearly transfer the main idea.

For the same reason, in the accompanying drawings, some elements may be exaggerated, omitted, or schematically illustrated. Also, the size of each element does not completely reflect the actual size. In the respective drawings, the same or corresponding elements are assigned the same reference numerals.

The advantages and features of the disclosure and ways to achieve them will be apparent by making reference to embodiments as described below in detail in conjunction with the accompanying drawings. However, the disclosure is not limited to the embodiments set forth below, but may be implemented in various different forms. The following embodiments are provided only to completely disclose the disclosure and inform those skilled in the art of the scope of the disclosure, and the disclosure is defined only by the scope of the appended claims. Throughout the specification, the same or like reference signs indicate the same or like elements.

Herein, it will be understood that each block of the flowchart illustrations, and combinations of blocks in the flowchart illustrations, can be implemented by computer program instructions. These computer program instructions can be provided to a processor of a general-purpose computer, special purpose computer, or other programmable data processing apparatus to produce a machine, such that the instructions, which execute via the processor of the computer or other programmable data processing apparatus, create means for implementing the functions specified in the flowchart block or blocks. These computer program instructions may also be stored in a computer usable or computer-readable memory that can direct a computer or other programmable data processing apparatus to function in a particular manner, such that the instructions stored in the computer usable or computer-readable memory produce an article of manufacture including instruction means that implement the function specified in the flowchart block or blocks. The computer program instructions may also be loaded onto a computer or other programmable data processing apparatus to cause a series of operational steps to be performed on the computer or other programmable apparatus to produce a computer implemented process such that the instructions that execute on the computer or other programmable apparatus provide steps for implementing the functions specified in the flowchart block or blocks.

Furthermore, each block in the flowchart illustrations may represent a module, segment, or portion of code, which includes one or more executable instructions for implementing the specified logical function(s). It should also be noted that in some alternative implementations, the functions noted in the blocks may occur out of the order. For example, two blocks shown in succession may in fact be executed substantially concurrently or the blocks may sometimes be executed in the reverse order, depending upon the functionality involved.

As used in embodiments of the disclosure, the term "unit" refers to a software element or a hardware element, such as a field programmable gate array (FPGA) or an application specific integrated circuit (ASIC), and the "unit" may perform certain functions. However, the "unit" does not always have a meaning limited to software or hardware. The "unit" may be constructed either to be stored in an addressable storage medium or to execute one or more processors. Therefore, the "unit" includes, for example, software elements, object-oriented software elements, class elements or task elements, processes, functions, properties, procedures, subroutines, segments of a program code, drivers, firmware, micro-codes, circuits, data, database, data structures, tables, arrays, and parameters. The elements and functions provided by the "unit" may be either combined into a smaller number of elements, or a "unit", or divided into a larger number of elements, or a "unit". Moreover, the elements and "units" may be implemented to reproduce one or more CPUs within a device or a security multimedia card.

The following detailed description of embodiments of the disclosure is directed to ultrahigh frequency mobile communication technology such as 6G beyond the 5G mobile communication, but based on determinations by those skilled in the art, the main idea of the disclosure may be applied to other communication systems having similar technical backgrounds through some modifications without significantly departing from the scope of the disclosure.

In the following description, some of terms and names defined in the 3rd generation partnership project long term evolution (3GPP LTE) standards (standards for 5G, NR, LTE, or similar systems) may be used for the convenience of description. However, the disclosure is not limited by these terms and names, and may be applied in the same way to systems that conform other standards.

In the following description, terms referring to signals, terms referring to channels, terms referring to control information, terms referring to network entities, terms referring to device elements, and the like are illustratively used for the sake of descriptive convenience. Therefore, the disclosure is not limited by the terms as used herein, and other terms referring to subjects having equivalent technical meanings may be used.

In the following description, the terms "physical channel" and "signal" may be interchangeably used with the term "data" or "control signal". For example, the term "physical downlink shared channel (PDSCH)" refers to a physical channel over which data is transmitted, but the PDSCH may also be used to refer to the "data". That is, in the disclosure, the expression "transmit ting a physical channel" may be construed as having the same meaning as the expression "transmitting data or a signal over a physical channel".

The word, transparent, in a transparent RIS device of the disclosure does not mean that an RIS is physically transparent, but means that an RIS does not transmit or receive a control signal and a base station (BS) and a user equipment (UE) do not transmit or receive a reference signal in order to directly control the corresponding RIS or to identify its position.

In the specification described hereinafter, an RIS may be understood as a concept including a transparent RIS.

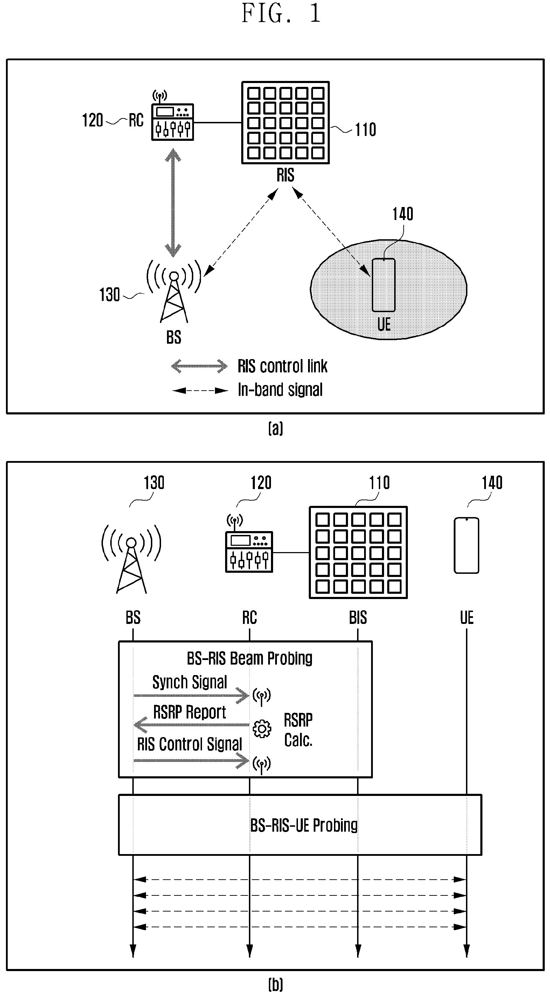

FIGS. 1A and 1B are diagrams illustrating a conventional RIS operation method.

Referring to FIG. 1A, in an RIS system, an RIS 110, an RC 120, a BS 130, and a UE 140 are included and operate. The RIS 110 may perform a role that enables the UE 140 located in a coverage hole to receive a signal from the BS 130, and to transmit a signal to the BS 130.

In FIG. 1B, the BS 130 may perform synchronization via communication with the RC 120 connected to the RIS 110, and may transmit a control signal to the RIS 110 so as to control the RIS 110. For example, the BS 130 may determine a direction of a beam reflected by the RIS 110.

Via a beam probing process between the BS 130 and the RC 120, the synchronization between the BS 130 and the RC 120, signal strength reporting, and control signal transferring may be performed, and the probing between the BS 130 and the UE 140 may be performed via the RIS 110.

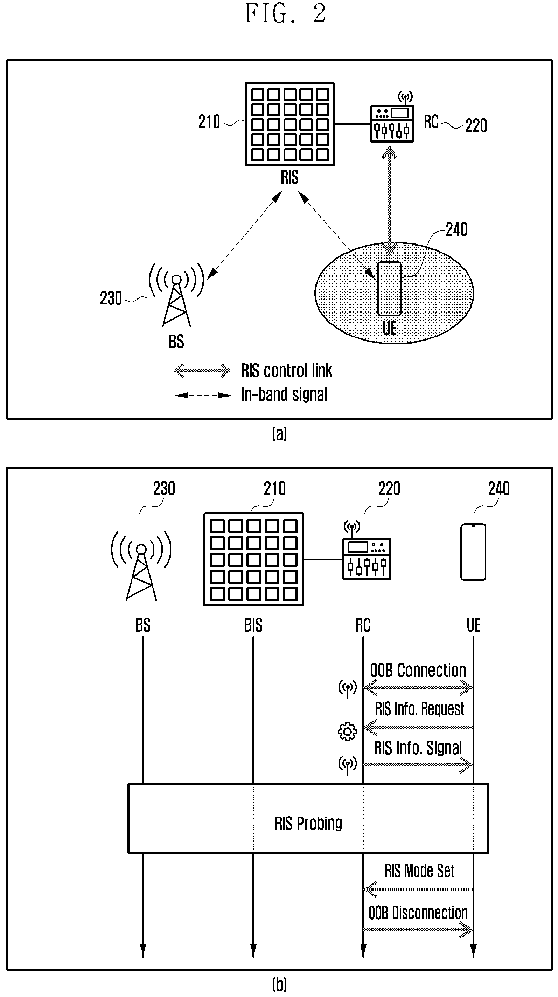

FIGS. 2A and 2B are diagrams illustrating another example of a conventional RIS operation method.

Referring to FIG. 2A, in an RIS system, an RIS 210, an RC 220, a BS 230, and a UE 240 are included and operate. The RIS 210 may perform a role that enables the UE 240 located in a coverage hole to receive a signal from the BS 240, and to transmit a signal to the BS 240.

In FIG. 2B, the UE 240 may perform synchronization via communication with the RC 220 connected to the RIS 210, and may transmit a control signal to the RIS 210 so as to control the RIS 210. The UE 240 may draw an optimal RIS mode via an RIS probing procedure with the RC 220, and may determine an RIS mode.

In FIGS. 1 and 2, communication between a BS or UE and an RC may be performed via an out-of-band (OOB) connection.

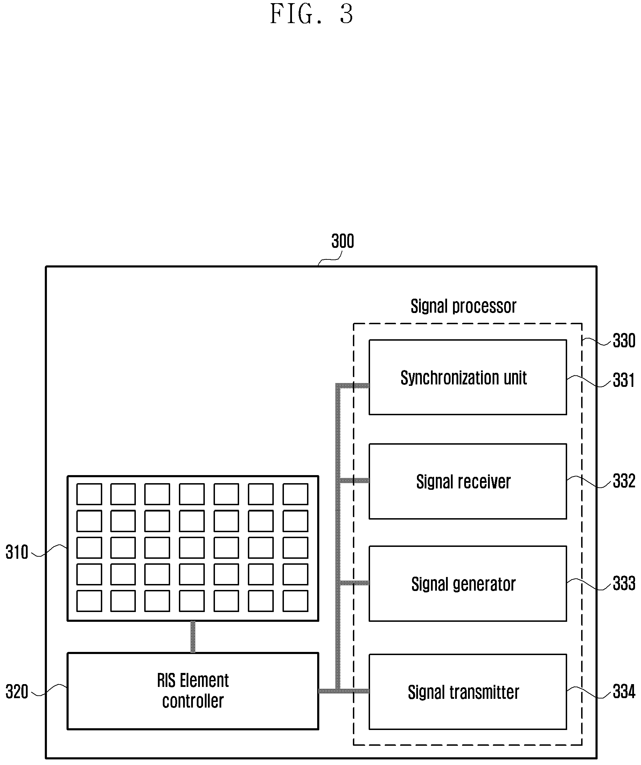

FIG. 3 is a diagram schematically illustrating a configuration of a conventional RIS.

Referring to FIG. 3, an RIS 300 may be configured to include an RIS element (RE) unit 310, an RE controller 320, and a signal processor 330. The signal processor 330 may be configured to include a synchronization unit 331, a signal receiver 332, a signal generator 333, and a signal transmitter 334.

The RE controller 320 may control the RE unit 310 so as to change the number of beams, a beam direction, a beam period, a beam width, a beam set, and the like.

By controlling the synchronization unit 331, the signal receiver 332, the signal generator 333, and the signal transmitter 334, the signal processor 330 may perform synchronization with a BS or a UE, may receive a reference signal or a control signal related to an RIS from the BS or UE, and may transmit a signal including information associated with the RIS to the BS or UE.

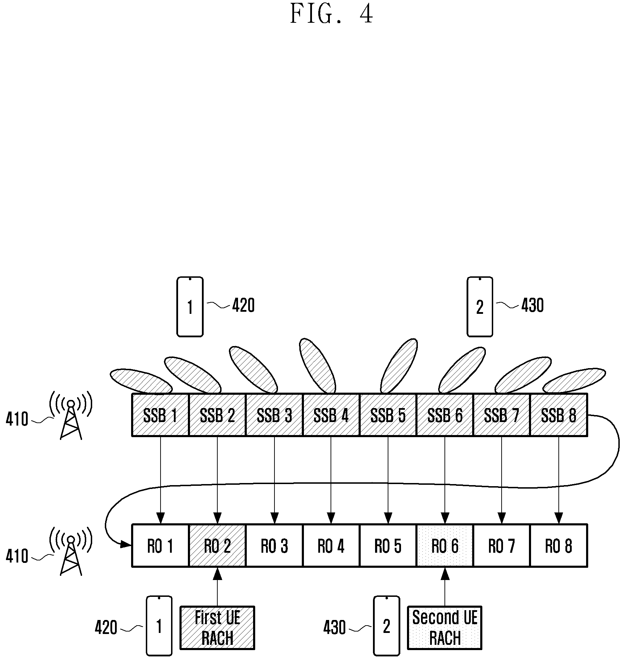

FIG. 4 is a diagram illustrating a random access procedure performed when an RIS is not utilized.

Referring to FIG. 4, a BS 410 may transmit SSBs having different SSB indices via plurality of beams, respectively, and, based on a signal measurement result, a UE may select one of the beams and transmit a preamble via an RACH occasion (RO) corresponding to the selected beam, so as to attempt a random access procedure.

In FIG. 4, a first UE 420 may select a beam by which SSB index 2 is transmitted, and may perform a random access procedure via RO 2 corresponding to the SSB index 2. A second UE 430 may select a beam by which SSB index 6 is transmitted, and may perform a random access procedure via RO 6 corresponding to the SSB index 6.

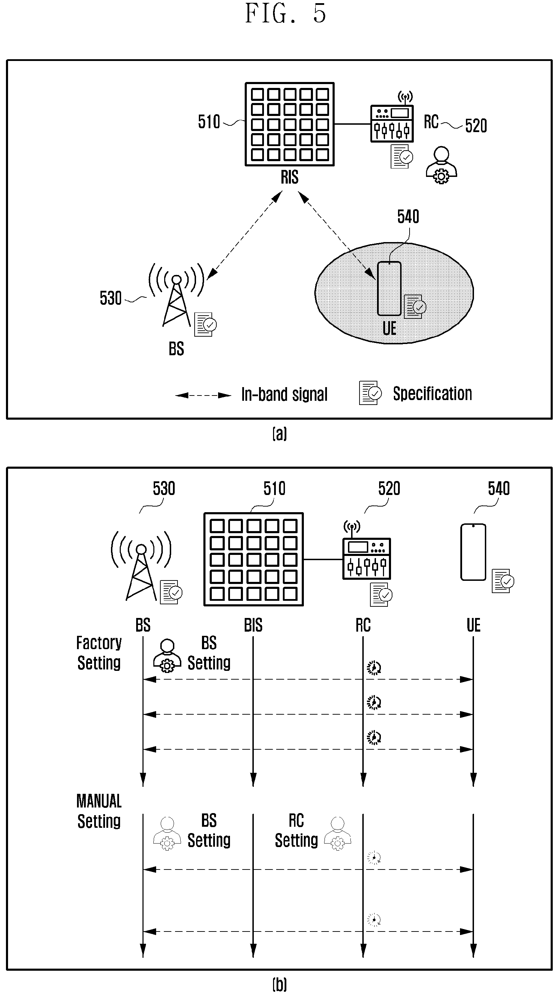

FIGS. 5A and 5B are diagrams schematically illustrating a configuration of a transparent RIS system and a configuration method according to an embodiment of the disclosure.

In FIG. 5A, an RIS system may be configured to include an RIS 510, an RC 520, a BS 530, and a UE 540.

The RIS 510 may reflect an electromagnetic wave, transmitted by the BS 530, toward a side of the UE 540, or conversely, may reflect an electromagnetic wave, transmitted by the UE 540, toward a size of the BS 530. The RIS 510 may be controlled by the RC 520. The RC 520, operated by an administrator with a permission to control the RIS 510, may generate a control signal for the RIS 510 and may transmit the same to the RIS.

In FIG. 5A, the RC 520 may be configured not to directly communicate with the BS 530 and UE 540. Accordingly, the RIS 510 may not operate by receiving a control signal from the BS 530 and UE 540, but may operate according to a predetermined configuration or a configuration that the administrator inputs to the RC 520.

FIG. 5B is a flowchart illustrating an initial configuration method of the RIS 510 and an operation method based thereon according to an embodiment of the disclosure.

Referring to FIG. 5B, an administrator with a permission for management may store initial configuration information in the BS 530 and RIS 510.

According to an embodiment of the disclosure, the initial configuration information of the RIS 510 may be defined in advance in 3GPP communication standard or the like, and the initial configuration information of the RIS 510 may include information associated with the number of reflected beams, a beam direction, a beam period, a beam width, a beam set, an origin direction, or the like of the RIS 510. The origin direction may be a direction of the BS.

The initial configuration information of the RIS 510 as described above may be changed by the administrator later, but it is configured so that the BS 530 and UE 540 are incapable of directly changing the configuration of the RIS 510 since the BS 530 and UE 540 are incapable of communicating with the RC 520.

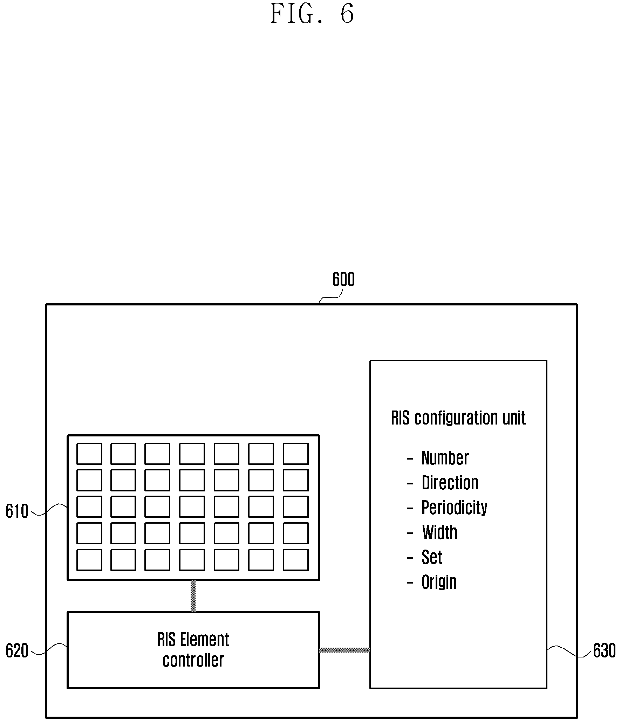

FIG. 6 is a diagram schematically illustrating a configuration of an RIS according to an embodiment of the disclosure.

Referring to FIG. 6, an RIS 600 of the disclosure may be configured as follows. The RIS 600 may include an RIS element (RE) unit 610, an RE controller 620, and an RIS configuration unit 630, and the RIS configuration unit 630 may be configured to include a reflected beam number (number of RIS reflection beams) configuration unit, a beam direction (direction of RIS beams) configuration unit, a beam period (periodicity of RIS beams) configuration unit, a beam width (width of RIS beams) configuration unit, a beam set (set of RIS beams) configuration unit, and an origin direction (origin of RIS beams) configuration unit.

The RE unit 610 may be configured as a reconfigurable element including multiple metamaterial unit cells, and the RE controller 620 may electrically or mechanically control an RE so as to change an amplitude or phase of an electromagnetic wave reflected or refracted by the RE.

The reflected beam number configuration unit may configure the number of beams reflected or refracted by the RIS 600. The beam direction configuration unit may configure a direction of a beam reflected or refracted by the RIS 600. The beam period configuration unit may configure a beam period of an RIS. The beam width configuration unit may configure a width of a beam reflected or refracted by an RIS. The beam set configuration unit may perform configuration associated with a beam set of the RIS 600. The origin direction configuration unit may perform configuration associated with a central axis of the RIS 600.

The RI 600 may operate by changing a direction of a reflected beam or incident beam, periodically, based on an RIS beam mode configured based on an initial configuration or a manual. The RIS 600 may not receive an input or a synchronization signal from the outside (BS or UE) in order to change an RIS beam mode, but may operate according to an initial configuration value.

The configuration information of the RIS 600 may be transferred to the RIS 600 and a BS by an administrator, the BS may transfer the configuration information to a UE, and the UE may transmit a physical uplink shared channel (PUSCH) by using the configuration information received from the BS.

Hereinafter, operation performed among an RIS, a BS, and a UE proposed to utilize a transparent RIS will be described with reference to various embodiments. The following embodiments are not mutually exclusive, and thus an RIS may operate in combination of multiple embodiments.

<First Embodiment>

To operate a transparent RIS, an existing RACH operation needs to be improved. According to an embodiment of the disclosure, an RACH operation improved for the operation of the transparent RIS may be referred to as an extended RACH.

The extended RACH may be defined as a beam discovery method that allocates an SSB, RACH, RACH occasion (RO), or the like in consideration of a period of an RIS when a BS transmits an SSB toward an RIS and identifies a best beam pair in a connected link such as BS-RIS-UE.

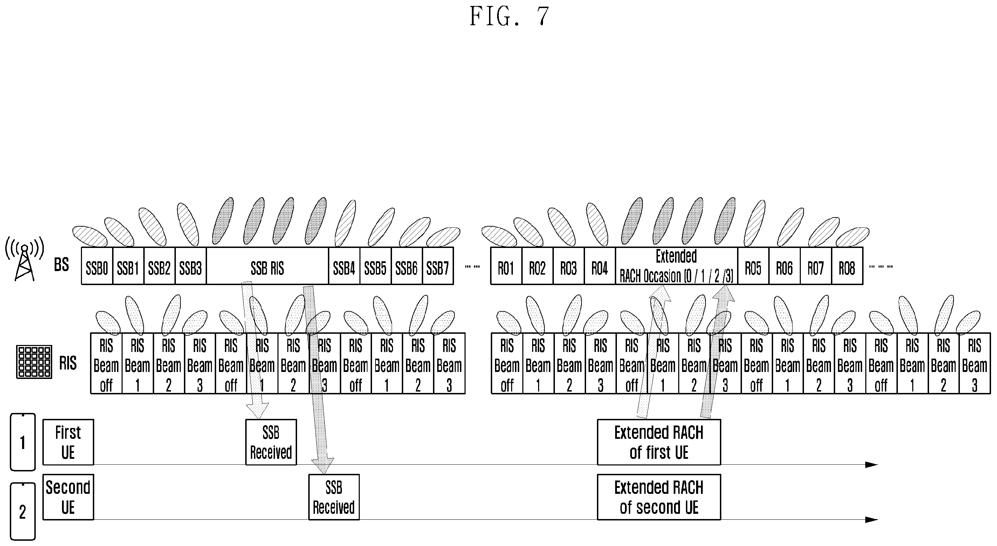

FIG. 7 is a diagram illustrating a transmission method of an extended RACH.

In an SSB transmitted from a BS 720, 1-bit RIS indicator information indicating that the corresponding SSB is transmitted toward the RIS 710, and RIS periodicity information indicating a configured mode period N of the RIS 710 may be included. The RIS periodicity information may be stored in the form of $\log_2 N$ when the mode period of the RIS 710 is N. When transmitting an SSB to the RIS 710, the BS 720 may repeatedly transmit an SSB during a time corresponding to the period of N. The BS 720 repeatedly transmits an SSB because the BS 720 and the RIS 710 are not directly connected nor synchronized with each other, and the BS 720 is incapable of knowing a current beam state by the RIS 710. Therefore, the BS 720 transmits an identical SSB via all beams of the RIS 710 so that a portion of the transmitted SSBs arrives a UE 730 or 740. The BS 720 may recognize location information of the RIS 710 based on an initial configuration, and may transmit an SSB toward the RIS 710 accordingly. However, the BS 720 is incapable of identifying whether a beam is transferred from the RIS 710 to the UE 730 or 740, and thus the repetitive SSB transmission may be needed.

The UE 730 and 740 may receive an SSB that the BS 720 transmits toward the RIS 710, decode the received SSB, identify an RIS indicator and RIS periodicity information and, based thereon, repeatedly transmit an RACH preamble N times. That is, the UE 730 or 740 may identify, based on the RIS indicator, whether the received SSB is transferred via the RIS 710, and, when the received SSB is transferred from the RIS 710, may identify the RIS periodicity information and may repeatedly transmit an RACH preamble during the corresponding period.

Referring to FIG. 7, the first UE 730 and the second UE 740 may be UEs positioned in locations that allow reception of beams reflected by RIS beam 1 and RIS beam 3. Although the first UE 730 and second UE 740 are turned on and in an operating state, they may not receive SSBs yet and not be synchronized with the BS 720, and the RIS 710 may also not be synchronized with the BS 720. Referring to FIG. 7, the base station 720 and the RIS 710 are not synchronized yet, and thus it is identified that a difference in time intervals exists between an SSB transmitted by the BS 720 and a beam mode of the RIS 710.

In this instance, a beam that the first UE 730 or the second UE 740 finally receives from the RIS is received based on a beam period of the RIS 710 and thus, unlike an initial access operation according to the conventional art, the UE 730 or 740 may not be capable of transmitting an RACH in an RO corresponding to a resource grid of the BS 720. For example, in the process of transmitting an SSB via the RIS 710, when the BS 720 performs transmission by changing a beam index, maintaining a direction of a beam as being toward the RIS 710, it may be difficult to align or match an RO to an RACH in the state of an asynchronous operation of the transparent RIS 710 between the BS 720 and the RIS 710. This is because when the BS 720 and the RIS 710 are in an unsynchronized state, a beam direction of the RIS 710 may be changed or the RIS 710 may be operated in a previous beam mode before the UE 730 or 740 sufficiently transmits an RACH during an SSB symbol length.

According to an embodiment of the disclosure, based on an RACH received via an RIS, a BS may identify that the corresponding RACH is a beam that follows a UE-RIS-BS root. Subsequently, the BS may transmit an RACH response message 2 (Msg2) and may receive a message 4 (Msg 4) from a UE according to an RIS period. According to the above-described process, both the BS and the UE may identify an RIS period and a beam transmission point of the RIS.

<Second Embodiment>

According to an embodiment of the disclosure, in operation of a transparent RIS, a guard symbol for an RIS needs to be configured.

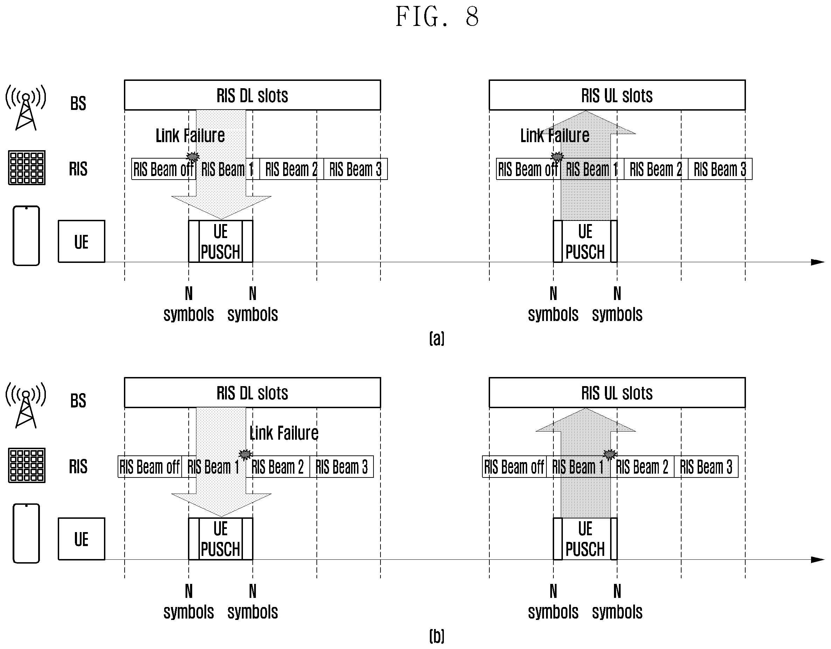

FIG. 8 is a diagram illustrating an RIS guard symbol in an operation method of a transparent RIS according to an embodiment of the disclosure.

To prevent a loss of a PDSCH or PUSCH transmission due to a link failure caused by a transition time of an unsynchronized RIS 810, when a BS 820 or UE 830 performs downlink (DL) or uplink (UL) transmission via an RIS 810, it is configured, in an embodiment of the disclosure, so that a predetermined number of preceding or following symbols based on a beam period of the RIS 810 do not perform transmission.

As described above, a symbol length for preventing a link failure may be configured by selecting from a plurality of guide symbol period sets by the BS 820 that is aware of previously configured configuration information of the RIS 810, and the BS 820 may transfer the corresponding configuration value to the UE 830 that needs to be scheduled via the RIS 810. In this process, the BS 820 may transmit the corresponding configuration value to the UE 830 via an RRC, MAC control element (MAC CE), or downlink control information (DCI).

According to an embodiment, the BS 820 may identify, via scheduling, a point in time where a link failure occurs in transmission via the RIS 810, and, based on an identification result, may configure, as a guide symbol, a portion of a symbol time located in a front or end part of the entire slot. Based on an identification result, the BS may configure the symbol time located in front and end parts of the entire slot as a guide symbol.

<Third Embodiment>

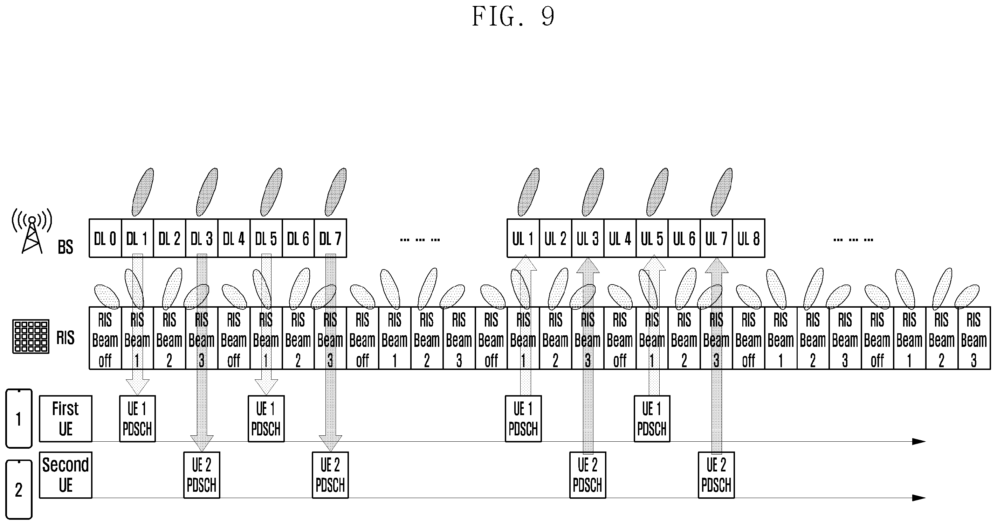

FIG. 9 is a diagram illustrating a method of performing data transmission and beam management, by an RIS 910 according to an embodiment of the disclosure.

Referring to FIG. 9, a BS 920 may perform DL and UL scheduling only for a beam set for which a link between BS-RIS-UE is secured. In FIG. 9, a PDSCH for a first UE 930 may be transferred via the RIS 910 in beams corresponding to DL 1 and DL 5, and a PDSCH for a second UE 940 may be transferred via the RIS 910 in beams corresponding to DL 3 and DL 7.

The UE 930 or 940 may receive configuration information of the RIS 910 and UL scheduling information from the BS 920, and may perform uplink transmission based thereon. In FIG. 9, a PUSCH of the first UE 930 may be transferred to the BS 920 via the RIS 910 in beams corresponding to UL 1 and UL 3, and a PUSCH of the second UE 940 may be transferred to the BS 920 via the RIS 910 in beams corresponding to UL 3 and UL 7.

In an RIS beam domain where transmission or reception is unavailable, the UE 930 or 940 may continuously search for another SSB and may search for a BS-UE link that does not go through the RIS 910 or a BS-RIS-UE link with a better communication condition.

The UE 930 or 940 may separately store and manage a reference signal received power (RSRP) of a signal received via the RIS 910 and an RSRP of a signal directly received from the BS 920. In the case of PUSCH transmission, the UE 930 or 940 may compare an RSRP of a signal received via the RIS 910 and an RSRP of a signal received from the BS 920, and when the RSRP of the signal received via the RIS 910 is higher, the UE 930 or 940 may transmit a PUSCH according to a timing utilized for PUSCH transmission via the RIS 910. Conversely, when the RSRP of the signal received from the BS 920 is higher, a PUSCH may be directly transmitted to the BS 920 without going through the RIS 910.

According to an embodiment of the disclosure, a BS may report, to a UE, a control signal including location information of an RIS via a DCI, MAC CE, or RRC.

In the case of performing signal transmission or reception with a UE via an RIS, the BS of the disclosure may improve the accuracy of estimating a UE location via a line of signal (LOS) signal, non-line of signal (NLOS) signal, or the like.

<Fourth Embodiment>

A BS according to an embodiment of the disclosure may determine a signal transmission period based on one of a plurality of methods, in the case of transmitting an SSB or downlink data to a UE.

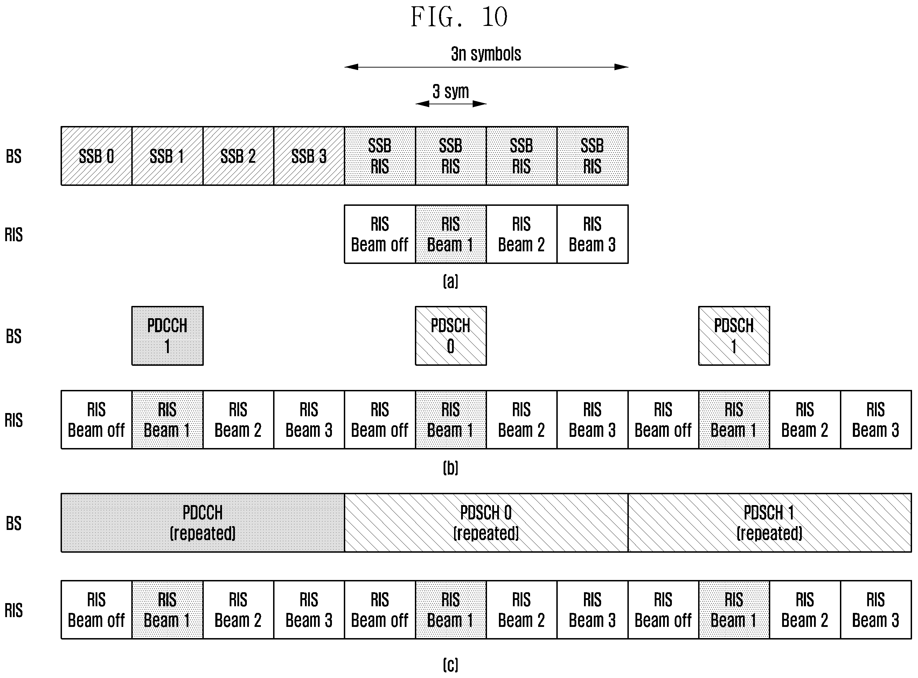

FIGS. 10A and 10B are diagrams illustrating SSB transmission and downlink data transmission in a DL operation when an RIS period is configured in units of symbols according to an embodiment of the disclosure.

Referring to FIG. 10A, when an RIS period is configured in units of symbols, an RIS direction may vary at a high speed. For example, when an SSB is a 3-symbol length, the RIS may change a direction based on a 3n-symbol unit. In this instance, a BS's downlink operation method may be performed according to one of the following two methods.

Method 1: transmits a PDCCH and PDSCH based on an RIS beam period (FIG. 10B).

Method 2: repeatedly transmits data in consideration of an RIS period in the case of PDSCH scheduling (FIG. 10C).

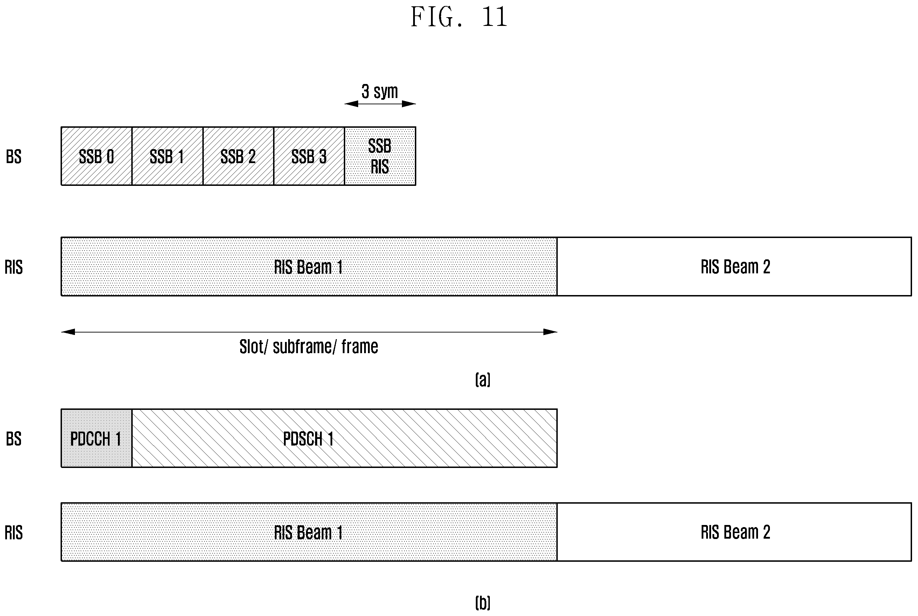

FIGS. 11A and 11B are diagrams illustrating SSB transmission and downlink data transmission in a DL operation when an RIS period is configured in units of slots, subframes, or frames according to an embodiment of the disclosure.

FIG. 11A is an example of SSB transmission performed by a BS, and FIG. 11B is an example of downlink data transmission performed by a BS.

Referring to FIG. 11A, when an RIS period is in units of slots or subframes, a BS may perform PDSCH scheduling in units of slots or subframes. In the case of an SSB transmitted via an RIS, an RIS scheduled in the same slot may transmit the same beam, and thus the BS may perform transmission by spreading out an SSB oriented toward the RIS over many slots. In this instance, the BS may reduce the number of SSBs transmitted to the RIS to one and perform transmission.

Referring to FIG. 11B, when an RIS period is configured in units of frames or greater, a UE may receive a system frame number (SFN) and a frame periodicity information of the RIS from a BS, and the UE may perform downlink and uplink scheduling for each frame period of the RIS. In addition, the UE may continuously attempt initial access for discovering another beam, in a period different from an RIS frame.

<Fifth Embodiment>

According to an embodiment of the disclosure, when an SSB is transmitted via an RIS, a mapping method in a time domain is proposed.

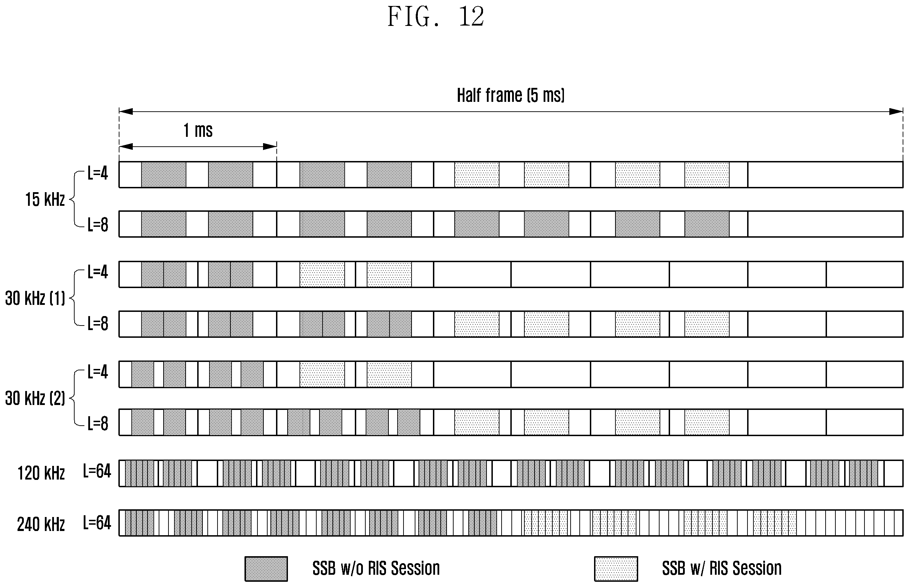

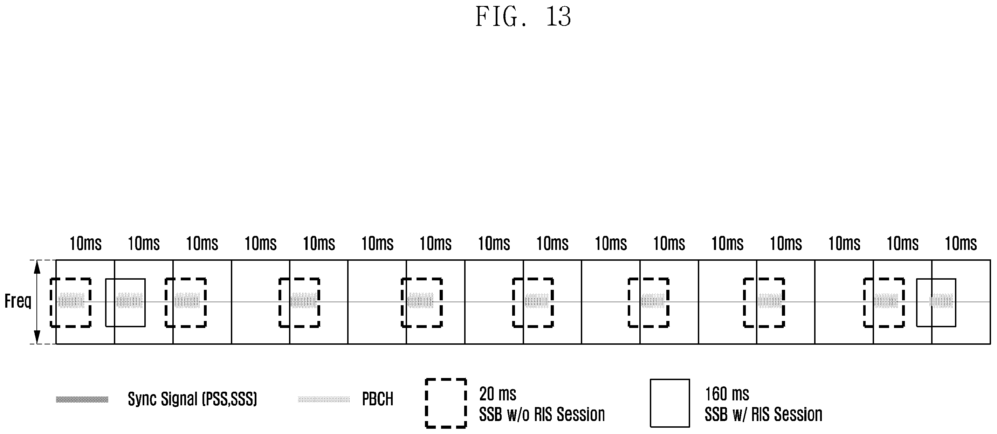

FIG. 12 and FIG. 13 are diagrams illustrating examples of an SSB time domain mapping method according to an embodiment of the disclosure.

FIG. 12 illustrates the case in which an RIS session SSB is capable of being added in a half frame which is half (5ms) a frame. In this instance, in addition to L which is an existing parameter, L_RIS may be transmitted to a UE via a system information block (SIB) 1, and an SFN may be calculated by using an existing MIB payload as it is. L and L_RIS may be parameters indicating the number of SSBs capable of being transmitted in a half frame.

FIG. 13 illustrates the case in which an RIS session SSB is incapable of being added in half of a frame, and in this instance, an RIS-dedicated transmission period may be added. In this instance, in consideration of transmission efficiency, an RIS-dedicated transmission period may be configured to be longer than an existing SSB.

<Sixth Embodiment>

According to an embodiment of the disclosure, when RACH transmission is performed using an RIS, a new physical broadcast channel (PBCH) payload and PBCH demodulation reference signal (DMRS) may be proposed.

According to an existing LTE or NR operation, an SSB index may be included in a PBCH DMRS based on a frequency as follows.

6Ghz or higher: For transmission of an SSB index (0~63), a 3-bit SSB index may be encoded to a PBCH DMRS, and 3 bits may be additionally included in a PBCH payload.

3Ghz~6Ghz: For transmission of an SSB Index(0~7), a 3-bit SSB index may be encoded to a PBCH DMRS.

3Ghz or lower: For transmission of an SSB index (0~3), a 2-bit SSB index may be encoded to a PBCH DMRS, and 1 bit may be additionally encoded to a half frame index.

According to an embodiment of the disclosure, in the case of an SSB transmitted from a BS to a UE via an RIS, repetitive transmission may be performed for an extended RACH and an identical SSB may be transmitted during the repetitive transmission.

In the disclosure, an SSB index parameter of a PBCH DMRS may not be used. For example, a PBCH DMRS with $i_{SSB} = 0$ may be generated and stored.

In the disclosure, in the payload of a PBCH, a payload associated with RIS information indicating that the corresponding SSB is an RIS SSB may be included in the form of 1-bit RIS indicator information. In addition, RIS periodicity information may be included in the payload of the PBCH. As described above, an RIS period may be stored in the form of $log_2 N$ when a mode period of the RIS is N.

A BS according to an embodiment of the disclosure may generate an RIS PBCH and a PBCH DMRS, and may perform repetitive transmission of an RIS SSB, as described above. A UE may receive an SSB transmitted from the BS via an RIS, and may decode an RIS PBCH via an RIS indicator payload or RIS periodicity information payload.

Table 1 shows a configuration of a payload of a PBCH provided in the disclosure.

[Table 1]

| LTE | Payload contents | NR (MIB) | NR (additional payload) | | |
|---|---|---|---|---|---|
| | | | >6GHz | 3~6GHz | <3 GHz |
| 3 bits | Channel bandwidth | | | | |
| 3 bits | PHICH configuration | | | | |
| 8 LSBs | System Frame Number (SFN) | 6 MSBs | 4 LSBs | | |
| | MSB of SS/PBCH block index | | 3 bits | | |
| | Half frame timing | | 1 bit | 1 bit | |
| | SCS for common control | 1 bit | | | |
| | SS/PBCH subcarrier offset | 4 bits | | 1 bit | 1 bit |
| | DMRS Type A position for PDSCH | 1 bit | | | |
| | SIB 1 PDCCH configuration | 8 bits | | | |
| | Cell barring info | 1 bit | | | |
| | Intra frequency reselection | 1 bit | | | |
| 10 bits | Spare -> **RIS info.** | 1 bit + **N bit** | | | |
| 24 bits | Total payload size | 23 bits+1 bit(choice) | | | |

Referring to Table 1, information associated with an RIS may be additionally included in a payload that is conventionally designated as a spare payload.

According to the embodiment, downlink synchronization may be enabled via an unsynchronized RIS, and initial access may be performed by an RACH. In addition, a PBCH DMRS is not encoded with an SSB index, and thus a portion or the whole of a decoding procedure of a PBCH DMRS may be omitted or decoding is enabled after quickly identifying whether it is a half frame. Accordingly, a decoding speed of a PBCH DMRS may be increased as compared with the existing scheme.

According to an embodiment of the disclosure, in the case of a DMRS of a PBCH, an SSB index may be stored in 3 LSBs of an SSB when a frequency is 3Ghz or higher, and an SSB index may be stored in 2 bits of an SSB and a half frame timing $n_{hf}$ when a frequency is 3Ghz or 3Ghz or lower.

According to an embodiment of the disclosure, sequencing of a DMRS of a PBCH may be performed via QPSK modulation, and a Pseudo random noise (PN) sequence may be utilized. A DMRS sequence may be generated via Equation 1 as given below.

[Equation 1]

$$c(n) = (x_1(n+N_C) + x_2(n+N_C)) \bmod 2 \ \ where \ N_C = 1600$$

$$x_1(n+31) = (x_1(n+3) + x_1(n)) \bmod 2 \ \ \ \ x_1(0) = 1, \ x_1(n) = 0, \ n = 1, 2, \ldots, 30$$

$$x_2(n+31) = (x_2(n+3) + x_2(n+2) + x_2(n+1) + x_2(n)) \bmod 2$$

In Equation 1, $x_2(n)$ may be expressed as $c_{init} = \overset{30}{\underset{i=0}{Q}} x_2(i) \mathsf{E} 2^i$ .

A $C_{init}$ value may be calculated via Equation 2 as given below.

[Equation 2]

$$c_{init} = 2^{11}(\bar{i}_{SSB}+1)(\star N_{ID}^{cell}/4++1) + 2^6(\bar{i}_{SSB}+1) + (N_{ID}^{cell} \bmod 4)$$

$$\bar{i}_{SSB} = i_{SSB} + 4n_{hf} \ (L_{\max} = 4) \ or \ \bar{i}_{SSB} = i_{SSB} \ (L_{\max} = 4 \ or \ 64)$$

In Equation 2, $n_{hf}$ is configured to 0 for a first half frame in a frame and is configured to 1 for a second half frame.

Conventionally, $i_{SSB}$ is determined based on a beam number for an SSB, and based on a value of $i_{SSB}$, a value of $c_{init}$ is determined, and the corresponding value may be used for QPSK modulation. In the disclosure, the value of $i_{SSB}$ is fixed for a beam transferred via an RIS. Accordingly, a PBCH DMRS is not encoded based on $i_{SSB}$ that changes based on a beam, and thus a portion or the whole of a PBCH DMRS decoding procedure may be omitted. Therefore, a PBCH DMRS decoding speed may be increased as compared with the conventional scheme. In addition, a UE may quickly perform identification associated with a half frame only in order to determine a value of $n_{hf}$, and may determine a value $\bar{i}_{SSB}$.

<Seventh Embodiment>

According to an embodiment of the disclosure, in the case of transmission of an extended RACH, a configuration of an RA-RNTI needs to be changed accordingly.

A random access radio network temporary identifier (RA-RNTI) is an RNTI used for scrambling a CRC of an RACH response (RAR) that is transmitted from a BS to a UE in response to a PRACH, which is conventionally calculated based on Equation 3 below, and determined.

[Equation 3]

$$RA\_RNTI = 1 + S_{id} + 14 \times t_{id} + 14 \times 80 \times f_{id} + 14 \times 80 \times 8 \times ul_{carrier\_id}$$

In Equation 3, $s_{id}$ denotes an index of a first OFDM symbol of a PRACH occasion ($0 \leq s_{id} \leq 14$), and $t_{id}$ denotes an index of a first slot in a PRACH occasion in a system frame ($0 \leq t_{id} \leq 80$). $f_{id}$ denotes an index of a PRACH occasion in a

frequency domain ($0 \leq f_{id} \leq 8$), and $ul_{carrierid}$ denotes an indicator of an uplink carrier used for random access preamble transmission (0 in the case of an NUL carrier, 1 in the case of an SUL carrier).

A UE may monitor a PDCCH during a predetermined period of time (e.g., RAR window) after transmitting an RACH, and identify whether an RAR is received. When an RAR is received, the UE decodes the RAR with an RA-RNTI obtained based on Equation 3, identify an index of an RACH preamble, and identify whether a BS receives a PRACH transmitted from the UE.

According to an embodiment of the disclosure, when an extended RACH is transmitted, an extended RA-RNTI may be employed accordingly, and the extended RA-RNTI may be calculated as given in Equation 4 below.

[Equation 4]

$$Extended \; RA \; RNTI \; = \; 1 + S_{id} + 14 \times t_{id} + 14 \times 80 \times ul_{carrier \; id}$$

In Equation 4, $s_{id}$ denotes an index of a first OFDM symbol of an extended PRACH occasion ($0 \leq s_{id} \leq 14$), and $t_{id}$ denotes an index of a first slot in an extended PRACH occasion in a system frame ($0 \leq t_{id} \leq 80$). $ul_{carrierid}$ denotes an identifier of an uplink carrier used for random access preamble transmission (0 in the case of an NUL carrier, 1 in the case of an SUL carrier).

Unlike an existing RA-RNTI calculation scheme, an unnecessary frequency domain-associated index may be deleted from the extended RA-RNTI calculation. As described below, this is because an FDM configuration may be disregarded in the case of extended RACH transmission.

According to an embodiment of the disclosure, in the case of an extended PRACH occasion, an extended RO may be configured based on a period of an RIS SSB according to Equation 5 as given below.

[Equation 5]

$$Extended \; RO \; = \; Normal \; RO \; \times \; T_{RIS}$$

When a BS performs an operation associated with an extended RACH, the BS may use an extended RA-RNTI instead of an RA-RNTI, and when a UE receives an SSB via an RIS, the UE may use an extended RA-RNTI to decode an RAR.

As described above, according to an embodiment of the disclosure, an extended RA-RNTI may be calculated so that a BS and a UE perform an extended RACH operation without confusing with an RA-RNTI when a proposed transparent RIS is used. Specifically, a frequency domain index, which is unnecessary and ambiguous, may be deleted from the extended RA-RNTI calculation, and thus an extended RA-RNTI may be calculated to correspond to operation of a transparent RIS.

<Eighth Embodiment>

According to an embodiment of the disclosure, when extended RACH transmission is performed as a transparent RIS is adopted, an RACH occasion allocation method may be changed from the existing scheme.

Conventionally, in NR, an RO supports a scheme that allocates a plurality of SSBs in one frequency region according to an RRC configuration. That is, an existing SSB may be allocated in PRACH transmission according to the following order.

- Ascending order of preamble indices in a single PRACH occasion
- Ascending order of frequency resource indices in an FDM PRACH occasion
- Ascending order of time resource indices associated with a TDPM PRACH occasion in a PRACH slot
- Ascending order of indices of PRACH slots

According to an embodiment of the disclosure, during an RIS period, a BS may transmit the same SSB and receive an extended RACH occasion. In an extended RACH transmission process, an FDM configuration is disregarded and only a TDM configuration is used. This is because, when an RIS is used, the direction of a beam via the RIS may be changed for each SSB, and thus an RO is incapable of being allocated to a frequency region. Therefore, according to an embodiment of the disclosure, the item "Ascending order of frequency resource indices in an FDM PRACH occasion" in the above-described SSB allocation order may be disregarded.

In addition, according to an embodiment of the disclosure, an RIS session may be added to a half frame. As described with reference to FIG. 12, in addition to L that is conventionally used, L_RIS may be transmitted to a UE via system information block (SIB) 1. In addition, an RIS-dedicated transmission period T_RIS may be added to a half frame, and the transmission period may be configured to be longer than an existing SSB.

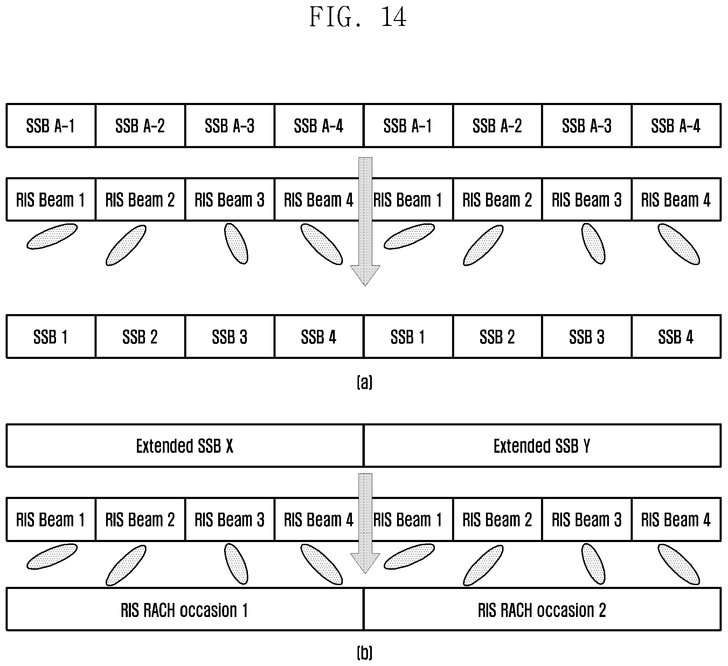

FIGS. 14A and 14B are diagrams illustrating an RIS PRACH occasion proposed in association with a transparent RIS operation according to an embodiment of the disclosure.

Referring to FIG. 14, a PRACH occasion for an SSB transferred via an RIS may be allocated according to one of the following methods.

Method 1: A BS transmits SSBs having different SSB indices based on an RIS period, and a UE responds to different ROs accordingly.

Method 2: A BS transmits an identical SSB (extended SSB) during an RIS period, and a UE receives an extended RACH occasion.

FIG. 14A illustrates that a BS transmits different SSB indices based on an RIS period according to method 1, and FIG. 14B illustrates that a BS transmits an identical SSB (extended SSB) during an RIS period (a period corresponding to 4 RIS beams in FIG. 12) according to method 2.

<Ninth Embodiment>

An embodiment of the disclosure proposes a timing offset calculation method for extended RACH transmission when a transparent RIS is used.

Conventionally, a transparent RIS structure is not used and timing offset calculation is not needed, and calculation of a timing advance (TA) is performed using a primary synchronization signal (PSS) or secondary synchronization signal (SSS).

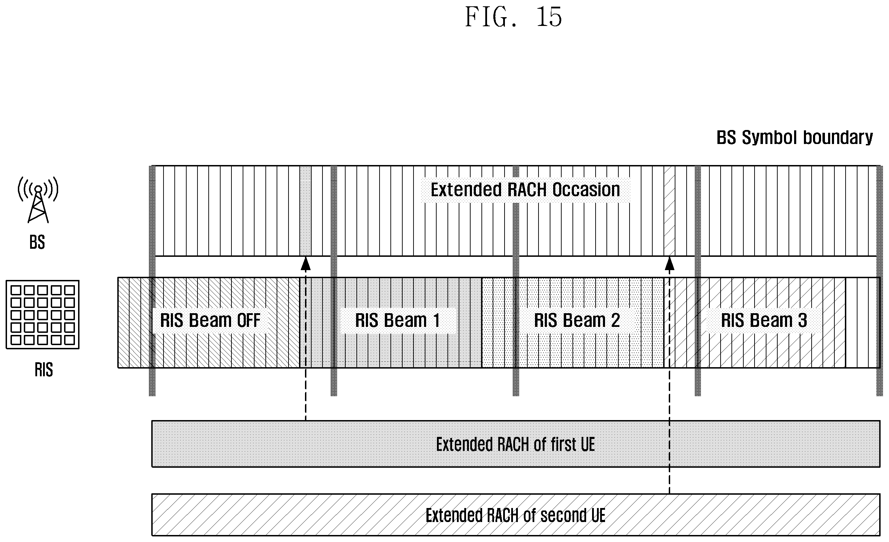

FIG. 15 is a diagram illustrating a method of configuring a timing offset for an RIS beam according to an embodiment of the disclosure.

Referring to FIG. 15, in the state in which an RIS is not synchronized with a BS, the BS may calculate an RIS beam change boundary based on a timing of an extended RACH that a UE transmits. In this process, the BS may calculate an unsynchronized offset of an RIS beam by using an RACH preamble received from the UE in an RACH occasion.

The BS may store, in a buffer, a signal received in an extended RO, and may receive a signal in units of symbol indices. For example, when the BS receives an extended RACH via an RIS at an $n^{th}$ symbol index, it is identified that the boundaries of the BS and the RIS are offset by n symbols. The BS may store the determined timing offset value, and may apply the offset by utilizing the determined timing offset value when performing DL or UL allocation to a UE and PDCCH allocation, and may perform PDSCH and PUSCH scheduling.

A UE may repeatedly transmit an extended RACH during an extended RO, and a symbol delay value for the RIS may be separately received via an RRC signal.

In FIG. 15, when an RACH of a first UE is transmitted via RIS beam #1, the BS may receive the same via an extended RO. The BS may recognize, calculate, or determine that an RIS beam mode is 3 symbols ahead of a symbol boundary. Similarly, when an RACH of a second UE is transmitted via an RIS beam #3, the BS may receive the same via an extended RO, and may recognize, calculate, or determine that an RIS beam mode is 3 symbols ahead of a symbol boundary.

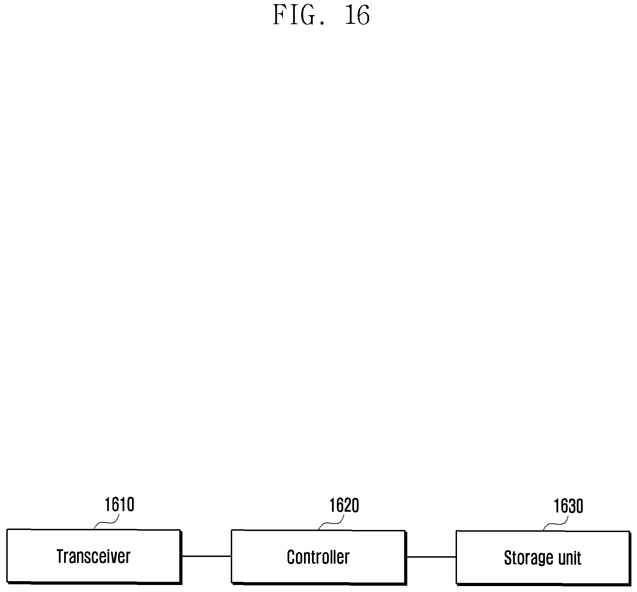

FIG. 16 illustrates a structure of a UE according to an embodiment of the disclosure.

Referring to FIG. 16, the UE may include a transceiver 1610, a controller 1620, and a storage 1630. In the disclosure, the controller may be defined as a circuit or an application-specific integrated circuit or at least one processor.

The transceiver 1610 may transmit/receive signals with other network entities. The transceiver 1610 may receive, for example, system information, synchronization signals, or reference signals from the base station.

The controller 1620 may control the overall operation of the UE according to the embodiments proposed in the disclosure. For example, the controller 1620 may control the operations proposed in the disclosure in order to receive an SSB signal from a base station, and depending on whether the corresponding signal is a signal transmitted through an RIS, correspondingly perform a rando access procedure.

The storage 1630 may store at least one of information transmitted/received through the transceiver 1610 and information generated through the controller 1620. For example, the storage 1630 may store RIS information received from a base station, uplink and downlink scheduling information received from the base station, and the like.

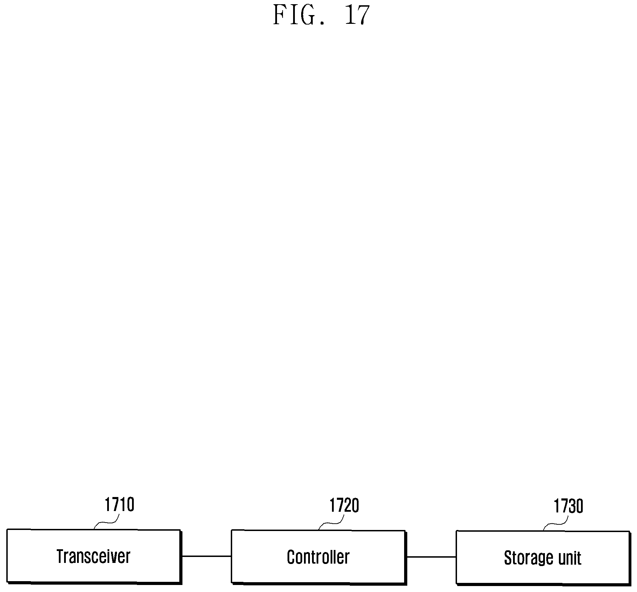

FIG. 17 illustrates a structure of a base station according to an embodiment of the disclosure.

Referring to FIG. 17, the base station may include a transceiver 1710, a controller 1720, and a storage 1730. In the disclosure, the controller may be defined as a circuit or an application-specific integrated circuit or at least one processor.

The transceiver 1710 may transmit/receive signals with other network entities. The transceiver 1710 may transmit, for example, system information, synchronization signals, or reference signals to UEs.

The controller 1720 may control the overall operation of the base station according to the embodiments proposed in the disclosure. For example, the transceiver may repeatedly transmit the same RIS SSB at SSB periods configured according to RISs, so as to perform the above-described operations.

The storage 1730 may store at least one of information transmitted/received through the transceiver 1710 and information generated through the controller 1720. For example, the storage 1730 may store information on initial configuration values of RISs, information on encoding methods of PBCH DMRSs, and the like.

Although the disclosure has been described using exemplary embodiments, various changes and modifications may be proposed to those skilled in the art. The disclosure is intended to include these changes and modifications falling within the appended claims. The description of the disclosure shall not be construed to imply that any specific components, steps, or functions are essential elements that should be included in the claims. The scope of protection of the disclosure shall be defined only by the appended claims.

## Claims

1. A method of a base station that communicates with a terminal via a reconfigurable intelligent surface (RIS) in a wireless communication system, the method comprising:

   obtaining configuration information associated with an RIS via a pre-configuration;
   identifying that a synchronization signal block (SSB) is to be transmitted via the RIS; and
   repeatedly transmitting an identical SSB during a time greater than or equal to a maximum period of the RIS.

2. The method of claim 1, further comprising including periodicity information of the RIS and 1-bit RIS indicator information in a payload of a physical broadcast channel (PBCH) included in the SSB,
   wherein the RIS indicator information indicates that the SSB is an SSB transferred via an RIS.

3. The method of claim 1, wherein an SSB index is fixed to a predetermined value, the SSB index being used for generating a PBCH demodulation reference signal (DMRS) included in the SSB.

4. The method of claim 1, further comprising:

   receiving, from the terminal, a physical random access channel (PRACH) preamble for random access; and
   scrambling a random access response (RAR) message, which is a response to the PRACH preamble, with an extended random access radio network temporary identifier (RA-RNTI) generated based on an equation,

   $$Extended\ RA\ RNTI\ =\ 1 + S_{id} + 14 \times t_{id} + 14 \times 80 \times ul_{carrier\ id}$$

   .

5. The method of claim 1, wherein an RACH occasion (RO) allocation process is performed only via time division multiplexing (TDM), and
   wherein, in case that frequency division multiplexing (FDM) configuration information exists, the base station does not use the FDM configuration information.

6. The method of claim 1, further comprising transmitting, to the terminal, information associated with RIS session addition via a system information block (SIB),

   wherein, in case that an RIS session SSB is addable to a half frame, the information associated with the RIS session addition further comprises information associated with a maximum number of SSBs capable of being transmitted in a half frame in case that an RIS session is added,
   wherein, in case that an RIS session SSB is not addable to a half frame, the information associated with the RIS session addition further comprises RIS-dedicated transmission periodicity information, which is dedicated to the RIS, and
   wherein an RIS-dedicated transmission period is configured to be greater than an SSB transmission period in case that an RIS is not used.

7. A method of a terminal that communicates with a base station via a reconfigurable intelligent surface (RIS) in a wireless communication system, the method comprising:

15

receiving a synchronization signal block (SSB) from the base station;
identifying whether the SSB is transmitted via an RIS; and
in case that the SSB is transmitted via the RIS, repeatedly transmitting a physical random access channel (PRACH) preamble based on RIS periodicity information indicated by a PBCH included in the SSB.

8. The method of claim 7, wherein the identifying of whether the SSB is transmitted via the RIS comprises performing the identification based on 1-bit RIS indicator information included in a payload of a physical broadcast channel (PBCH) included in the SSB.

9. The method of claim 7, further comprising performing decoding of the PBCH included in the SSB,
wherein the decoding of the PBCH is performed by using an SSB index fixed to a predetermined value.

10. The method of claim 7, further comprising:

receiving a random access response (RAR) message with respect to the PRACH preamble; and
decoding the RAR message by using an extended random access radio network temporary identifier (RA-RNTI) generated based on an equation,

$$Extended\ RA\ RNTI\ =\ 1 + S_{id} + 14 \times t_{id} + 14 \times 80 \times ul_{carrier\ id}$$ .

11. A base station that communicates with a terminal via a reconfigurable intelligent surface (RIS) in a wireless communication system, the base station comprising:

a transceiver; and
a controller configured to
obtain configuration information associated with an RIS via a pre-configuration,
identify that a synchronization signal block (SSB) is to be transmitted via the RIS, and
repeatedly transmit an identical SSB during a time greater than or equal to a maximum period of the RIS.

12. The base station of claim 11, wherein the controller is further configured to include periodicity information of the RIS and 1-bit RIS indicator information in a payload of a physical broadcast channel (PBCH) included in the SSB, and wherein the RIS indicator information indicates that the SSB is an SSB transferred via an RIS.

13. A terminal that communicates with a base station via a reconfigurable intelligent surface (RIS) in a wireless communication system, the terminal comprising:

a transceiver; and
a controller configured to
receive a synchronization signal block (SSB) from a base station,
identify whether the SSB is transmitted via an RIS, and
in case that the SSB is transmitted via the RIS, repeatedly transmit a physical random access channel (PRACH) preamble based on RIS periodicity information indicated by a PBCH included in the SSB.

14. The method of claim 13, wherein the controller is configured to, in the identifying of whether the SSB is transmitted via the RIS, perform identification via 1-bit RIS indicator information included in a payload of a physical broadcast channel (PBCH) included in the SSB.

15. The terminal of claim 13, wherein the controller is configured to:

receive a random access response (RAR) message with respect to the PRACH preamble, and
decode the RAR message by using an extended random access radio network temporary identifier (RA-RNTI) generated based on an equation,

$$\text{Extended RA RNTI} = 1 + S_{id} + 14 \times t_{id} + 14 \times 80 \times ul_{carrier\ id}.$$

$$\text{Extended RA RNTI} = 1 + S_{id} + 14 \times t_{id} + 14 \times 80 \times ul_{carrier\ id}$$

# FIG. 1

(a)

(b)

## FIG. 2

(a)

(b)

# FIG. 3

FIG. 4

# FIG. 5

(a)

(b)

# FIG. 6

600

610

620

RIS Element
controller

RIS configuration unit

- Number
- Direction
- Periodicity
- Width
- Set
- Origin

630

FIG. 7

EP 4 586 706 A1

# FIG. 8

BS · RIS DL slots · RIS UL slots

RIS · Link Failure · RIS Beam off | RIS Beam 1 | RIS Beam 2 | RIS Beam 3 · Link Failure · RIS Beam off | RIS Beam 1 | RIS Beam 2 | RIS Beam 3

UE · UE PUSCH · UE PUSCH

N symbols · N symbols · N symbols · N symbols

(a)

BS · RIS DL slots · RIS UL slots

RIS · Link Failure · RIS Beam off | RIS Beam 1 | RIS Beam 2 | RIS Beam 3 · RIS Beam off | RIS Beam 1 | RIS Beam 2 | RIS Beam 3

UE · UE PUSCH · UE PUSCH

N symbols · N symbols · N symbols · N symbols

(b)

FIG. 9

FIG. 10

# FIG. 11

(a)

(b)

FIG. 12

Half frame (5 ms)

1 ms

15 kHz
- L=4
- L=8

30 kHz (1)
- L=4
- L=8

30 kHz (2)
- L=4
- L=8

120 kHz L=64

240 kHz L=64

SSB w/o RIS Session          SSB w/ RIS Session

EP 4 586 706 A1

FIG. 13

Freq

10ms 10ms 10ms 10ms 10ms 10ms 10ms 10ms 10ms 10ms 10ms 10ms 10ms 10ms 10ms 10ms

Sync Signal (PSS,SSS)

PBCH

20 ms
SSB w/o RIS Session

160 ms
SSB w/ RIS Session

FIG. 14

| SSB A-1 | SSB A-2 | SSB A-3 | SSB A-4 | SSB A-1 | SSB A-2 | SSB A-3 | SSB A-4 |
|---------|---------|---------|---------|---------|---------|---------|---------|

| RIS Beam 1 | RIS Beam 2 | RIS Beam 3 | RIS Beam 4 | RIS Beam 1 | RIS Beam 2 | RIS Beam 3 | RIS Beam 4 |
|------------|------------|------------|------------|------------|------------|------------|------------|

| SSB 1 | SSB 2 | SSB 3 | SSB 4 | SSB 1 | SSB 2 | SSB 3 | SSB 4 |
|-------|-------|-------|-------|-------|-------|-------|-------|

(a)

| Extended SSB X | Extended SSB Y |
|----------------|----------------|

| RIS Beam 1 | RIS Beam 2 | RIS Beam 3 | RIS Beam 4 | RIS Beam 1 | RIS Beam 2 | RIS Beam 3 | RIS Beam 4 |
|------------|------------|------------|------------|------------|------------|------------|------------|

| RIS RACH occasion 1 | RIS RACH occasion 2 |
|---------------------|---------------------|

(b)

EP 4 586 706 A1

## FIG. 15

BS Symbol boundary

BS

RIS

Extended RACH Occasion

RIS Beam OFF

RIS Beam 1

RIS Beam 2

RIS Beam 3

Extended RACH of first UE

Extended RACH of second UE

EP 4 586 706 A1

FIG. 16

| 1610 | 1620 | 1630 |
| Transceiver | Controller | Storage unit |

# FIG. 17

| 1710 | 1720 | 1730 |
|------|------|------|
| Transceiver | Controller | Storage unit |

## INTERNATIONAL SEARCH REPORT

| International application No. |
| --- |
| **PCT/KR2023/017689** |

**A.    CLASSIFICATION OF SUBJECT MATTER**

**H04W 56/00**(2009.01)i; **H04B 7/145**(2006.01)i; **H04W 48/10**(2009.01)i; **H04W 74/08**(2009.01)i; **H04L 5/00**(2006.01)i

According to International Patent Classification (IPC) or to both national classification and IPC

**B.    FIELDS SEARCHED**

Minimum documentation searched (classification system followed by classification symbols)

H04W 56/00(2009.01); H04B 1/401(2015.01); H04B 7/06(2006.01); H04L 5/00(2006.01); H04W 16/02(2009.01); H04W 74/08(2009.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: RIS, 설정 정보(configuration information), SSB, 주기(period), 반복(repetition)

**C.    DOCUMENTS CONSIDERED TO BE RELEVANT**

| Category* | Citation of document, with indication, where appropriate, of the relevant passages | Relevant to claim No. |
| --- | --- | --- |
| X | WO 2022-193048 A1 (QUALCOMM INCORPORATED) 22 September 2022 (2022-09-22)<br>See paragraphs [0093]-[0125]; claims 17, 22 and 24; and figures 10-12. | 1,11 |
| Y | | 7,13 |
| A | | 2-6,8-10,12,14-15 |
| Y | WO 2022-094905 A1 (QUALCOMM INCORPORATED) 12 May 2022 (2022-05-12)<br>See paragraphs [0114]-[0168]; claims 1 and 3; and figures 10-15. | 7,13 |
| A | WO 2022-151016 A1 (QUALCOMM INCORPORATED) 21 July 2022 (2022-07-21)<br>See paragraphs [0124]-[0149]; and figures 11-12. | 1-15 |
| A | WO 2022-073161 A1 (QUALCOMM INCORPORATED) 14 April 2022 (2022-04-14)<br>See paragraphs [0082]-[0109]; and figures 16-21. | 1-15 |

☑ Further documents are listed in the continuation of Box C.     ☑ See patent family annex.

| | | |
| --- | --- | --- |
| * | Special categories of cited documents: | |
| "A" | document defining the general state of the art which is not considered to be of particular relevance | "T"    later document published after the international filing date or priority date and not in conflict with the application but cited to understand the principle or theory underlying the invention |
| "D" | document cited by the applicant in the international application | "X"    document of particular relevance; the claimed invention cannot be considered novel or cannot be considered to involve an inventive step when the document is taken alone |
| "E" | earlier application or patent but published on or after the international filing date | |
| "L" | document which may throw doubts on priority claim(s) or which is cited to establish the publication date of another citation or other special reason (as specified) | "Y"    document of particular relevance; the claimed invention cannot be considered to involve an inventive step when the document is combined with one or more other such documents, such combination being obvious to a person skilled in the art |
| "O" | document referring to an oral disclosure, use, exhibition or other means | |
| "P" | document published prior to the international filing date but later than the priority date claimed | "&"    document member of the same patent family |

| Date of the actual completion of the international search | Date of mailing of the international search report |
| --- | --- |
| **13 February 2024** | **13 February 2024** |

| Name and mailing address of the ISA/KR | Authorized officer |
| --- | --- |
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

**INTERNATIONAL SEARCH REPORT**

| International application No. |
| --- |
| **PCT/KR2023/017689** |

**C.    DOCUMENTS CONSIDERED TO BE RELEVANT**

| Category* | Citation of document, with indication, where appropriate, of the relevant passages | Relevant to claim No. |
| --- | --- | --- |
| A | CN 114448586 A (VIVO MOBILE COMMUNICATION CO., LTD.) 06 May 2022 (2022-05-06)<br>    See claims 1-19. | 1-15 |

Form PCT/ISA/210 (second sheet) (July 2022)

**INTERNATIONAL SEARCH REPORT**
Information on patent family members

International application No.

**PCT/KR2023/017689**

| Patent document cited in search report | | | | Publication date (day/month/year) | Patent family member(s) | | | Publication date (day/month/year) |
|---|---|---|---|---|---|---|---|---|
| WO | 2022-193048 | A1 | | 22 September 2022 | None | | | |
| WO | 2022-094905 | A1 | | 12 May 2022 | CN | 116420388 | A | 11 July 2023 |
| | | | | | EP | 4241482 | A1 | 13 September 2023 |
| | | | | | KR | 10-2023-0101801 | A | 06 July 2023 |
| | | | | | US | 2023-0362847 | A1 | 09 November 2023 |
| WO | 2022-151016 | A1 | | 21 July 2022 | CN | 116830757 | A | 29 September 2023 |
| | | | | | KR | 10-2023-0131836 | A | 14 September 2023 |
| WO | 2022-073161 | A1 | | 14 April 2022 | CN | 116724609 | A | 08 September 2023 |
| | | | | | EP | 4226693 | A1 | 16 August 2023 |
| | | | | | US | 2023-0337158 | A1 | 19 October 2023 |
| CN | 114448586 | A | | 06 May 2022 | CN | 112248866 | A | 22 January 2021 |
| | | | | | CN | 112248866 | B | 29 April 2022 |
| | | | | | CN | 114449528 | A | 06 May 2022 |
| | | | | | CN | 114449680 | A | 06 May 2022 |
| | | | | | EP | 4221296 | A1 | 02 August 2023 |
| | | | | | EP | 4224980 | A1 | 09 August 2023 |
| | | | | | EP | 4228097 | A1 | 16 August 2023 |
| | | | | | EP | 4242051 | A1 | 13 September 2023 |
| | | | | | KR | 10-2023-0076134 | A | 31 May 2023 |
| | | | | | US | 2023-0261708 | A1 | 17 August 2023 |
| | | | | | US | 2023-0262794 | A1 | 17 August 2023 |
| | | | | | WO | 2022-095472 | A1 | 12 May 2022 |
| | | | | | WO | 2022-095619 | A1 | 12 May 2022 |
| | | | | | WO | 2022-095849 | A1 | 12 May 2022 |
| | | | | | WO | 2022-095978 | A1 | 12 May 2022 |
| | | | | | WO | 2022-095979 | A1 | 12 May 2022 |

Form PCT/ISA/210 (patent family annex) (July 2022)